# EUROPEAN PATENT SPECIFICATION

(11) **EP 1 059 863 B1**
(45) Date of publication and mention of the grant of the patent: **18.06.2003**
(21) Application number: 99909405.5
(22) Date of filing: 04.03.1999
(51) Int. Cl.: A47B 21/03

(54) **WRIST PAD**
HANDGELENKKISSEN
APPUI-POIGNETS

(30) Priority: 06.03.1998 NL 1008509; 06.03.1998 NL 1008508; 31.08.1998 NL 1009973
(43) Date of publication of application: 20.12.2000
(73) Proprietor: OneStop B.V., 2132 WV Hoofddorp (NL)
(72) Inventor: DE BEER, Johannes, Henricus, Petrus, 2133 HL Hoofddorp (NL)
(74) Representative: Wittop Koning, Tom Hugo
(86) International application number: NL9900117
(87) International publication number: WO99044470

(56) References cited:
- WO-A-98/08420
- US-A- 5 125 606

## Description

This invention relates to a support for supporting an arm or a wrist in particular during the use of a keyboard or a computer mouse, at least comprising the following in the specified order:
- a top covering layer,
- a layer of a substantially gel-free resilient material (5), containing gas, in particular air,
- at least one reinforcement layer made of a substantially non-compressible material, and
- a bottom layer,
the bottom layer and the covering layer being connected to each other so that they enclose the resilient layer and the reinforcement layer.

Such a support is known from US-A-5,125,606. In said support, the reinforcement layer is made from a wooden slat on which a layer of foam padding is placed followed by a cover which is stapled and glued to the bottom of the wooden slat. A bottom layer is placed against the underside of the support. The arrangement and fixation of the different layers in the support of US-A-5,125,606 is complicated and laborious; before placing the bottom layer against the slat, the top covering layer has to be folded over the bottom surface of the wooden slat and be fixed thereto by gluing and stapling. The slat must be of such dimensions that staples can hold therein.

The present invention provides a support of simple manufacture and is thereto characterized in that the covering layer and the bottom layer are joined together to form a seal by means of thermal fusion and that means which prevent gas displacement out of the resilient layer in the direction of the bottom layer are accommodated in the support, said means being formed by
a) the resilient material having a closed cell structure or
b) a substantially airtight envelope, enclosing the resilient material, which is open cell foam material, preventing gas displacement out of the resilient material in the direction of the bottom layer.

During use of the support, an arm or a wrist rests on the support while the keyboard is being used, so that the resilient material present in the support is depressed. This causes the gas present in the support, usually air, to be partially forced out of the resilient material and to accumulate elsewhere in the support. This accumulation of air would in particular occur between the reinforcement layer and the bottom layer, with the result that the bottom layer bulges out slightly. The contact between the support and the work surface on which the support is placed, is then consequently reduced, and the support will make tilting movements in each case during use.

In order to avoid accumulation of air between the bottom layer and reinforcement layer, means which prevent gas displacement out of the resilient layer in the direction of the bottom layer, are accommodated in the support. During use, the air can no longer accumulate between the reinforcement layer and the bottom layer, with the result that the bottom layer retains its flat structure and remains fully in contact with the work surface.

It is pointed out that use of a gel-containing resilient layer in wrist supports is generally known; see, for example, WO 98/08420. The disadvantage of such materials is, however, their high cost and the difficulty of manufacturing them. Moreover, the gel material heats up during use, which promotes the growth of bacteria in the gel material.

By "resilient material containing gas, in particular air", material is meant that contains gas and that is compressible. When a load is placed on such a material, the gas will be forced out of the material. Owing to the fact that the material is resilient, the material will take up gas when the load is removed, so that it assumes its original volume. A suitable resilient material preferably comprises a foam material such as, for example, polyether, polyethylene or polyurethane, neoprene and latex rubbers, in particular polyurethane foam material.

"Means which prevent gas displacement out of the resilient material" can, for example, be embodied in the foam material itself. For instance, in an advantageous embodiment of the support according to the invention, the resilient material has a closed-cell structure. During use, such a resilient material will be sufficiently depressed for comfortable use, but the gas enclosed in the cells of the material cannot accumulate between the reinforcement layer(s) and the bottom layer.

In another embodiment of the support of the present invention, open-cell foam material is used, which is enclosed in a substantially air-impermeable envelope. When such an enveloped foam material is incorporated in the support, the support will be depressed during use, and the air will be partially expelled. However, the air is trapped in the envelope and cannot move in the direction of the bottom layer, and therefore cannot accumulate between the reinforcement layer(s) and the bottom layer, with the result that tilting movements of the support are prevented.

A very special embodiment of the support according to the invention comprises an additional, substantially air-impermeable layer between the resilient material and the reinforcement layer(s), enclosing the resilient layer in an airtight manner between the covering layer and the additional layer. Such a support thus comprises two compartments separated from each other in an airtight manner, the resilient layer being enclosed in the first compartment, bounded by the covering layer and the additional layer. The reinforcement layer(s) is (are) accommodated in the second compartment, bounded by the additional layer and the bottom layer. Displacement of air out of the first compartment into the second compartment is not possible with this embodiment, with the result that the air accumulation between the reinforcement layer(s) and the bottom layer does not occur during use of the support.

The support comprises one or more reinforcement layers, made of substantially non-compressible material, in order to give the support firmness and to prevent the support from sagging when it is picked up. A suitable material for a reinforcement layer can be, for example, sheet material of wood or plastic, such as PVC or polyacrylate. Such a backing material is flat, with the result that the support will remain in good contact with a work surface or desk. It is possible to opt to incorporate several reinforcement layers of the same or different material in the support according to the invention, for example in order to give additional firmness and body to the support. The reinforcement layer(s) is (are) preferably flexible, and at least one of the reinforcement layers is made in such a way that it is reversibly flexible. By reversibly flexible material we mean flexible material which can be bent, but which will spring back to its original state after having been placed under load. This layer serves as the restoring means; when the support is bent, it will be returned to its original state by the bendability of the abovementioned reversibly flexible reinforcement layer. Suitable material for this layer is, for example, PVC in a thickness of approximately 0.6 mm. In order to increase this restoring capacity, said reinforcement layer can be slightly pre-bent or incorporated in the support under initial tension. The support advantageously comprises at least a reinforcement layer of reversibly flexible material, of the type described above, and a flexible form-retaining material which gives the support primarily firmness and body. A very suitable material for such a reinforcement layer is cardboard in a weight of 13-18 g/cm². A single reinforcement layer can also be selected.

Other examples of suitable materials for one or more reinforcement layers are PVC, polyester, Lexan, acrylate, polystyrene, Perspex and polypropylene.

The covering layer preferably comprises a flexible air-impermeable and moisture-impermeable material such as smooth or roughened PVC, vinyl or polypropylene, preferably soft vinyl types and roughened PVC, which give the support a comfortable surface.

The bottom layer preferably comprises anti-slip material on the side facing away from the reinforcement layer. However, it is preferable to make this bottom layer entirely of an anti-slip material. This material is likewise preferably moisture-impermeable, in order to prevent moisture from penetrating into the support. Examples of a suitable material for this layer are PVC film, neoprene rubber and latex rubber. It is also possible to provide the bottom layer locally with anti-slip material, such as, for example, rubber or felt feet.

If suitable material is selected for the outer layers, i.e. the covering layer and the bottom layer, the edges of the support can be fused together, which makes simple manufacture possible and guarantees optimum sealing.

In a special embodiment, the support according to the invention is intended for supporting an arm or wrist in particular during use of a computer mouse, and to this end it advantageously comprises a mouse mat. Such an assembly has been found to be a useful aid during the use of a computer mouse, because the wrist need no longer be raised in order to use the mouse, but can remain resting on the support, with the result that the hand does not become tired so quickly. The presence of a mouse mat ensures that a suitable surface is provided for use of the mouse, one which does not come away from the support during use. An edge of the mouse mat is advantageously connected to an edge of the support, for example by gluing, fusing etc.

In a preferred embodiment, the abovementioned support is constructed in such a way that at least on one side the bottom layer of the support projects from the support by the same dimensions as the mouse mat, the projecting part comprising a top surface which has sufficient friction with a computer mouse to allow use of the latter. In the case of this construction, the support has a joint bottom layer, which is preferably made of an anti-slip material. The top surface of the mouse mat can be selected from the same material as the covering layer of the support, but another material is also possible; for instance a transparent PVC material is excellent as a top layer for the mouse mat part of the support. With this material as the top surface, it is possible to place a layer of a printed material, such as paper, between the bottom layer and said transparent top surface, which makes the mouse mat part suitable for accommodating and displaying, for example, an advertising message. Of course, it is also possible to place one or more additional reinforcement layers between the top surface of the mouse mat and the bottom layer, for example as described above for the support.

However, it is also possible to dispense with fixing a top layer on the projecting part of the bottom layer; in this case the top side of the bottom layer as such serves as a mouse mat. For this embodiment, the bottom layer does have to have sufficient friction with a computer mouse to make use of the mouse possible.

It is even more preferable for the support to be constructed in such a way that at least on one side both the covering layer and the bottom layer of the support project by the same dimensions as a mouse mat and are joined together, thereby forming a mouse mat. A support of this type can be very desirable from an aesthetic point of view, because the outer material of the support is made of one common covering layer and one common bottom layer.

The invention also provides a method for manufacturing a support according to the invention, in which a bottom layer, at least one reinforcement layer, an additional, substantially air-impermeable layer, a resilient layer and a covering layer are placed in succession on top of one another, in the above or in the reverse order, the dimensions of these layers being selected in such a way that the bottom layer, the additional layer and the covering layer project on all sides beyond the reinforcement layer(s) and the resilient layer, after which the projecting parts of the covering layer, the additional layer and the bottom layer are joined together and thereby enclose the resilient layer in a substantially airtight manner between the covering layer and the additional layer, and the reinforcement layer(s) between the additional layer and the bottom layer. In this way, two separate compartments are formed within the support, without air exchange between the compartments being possible. The projecting parts can be joined together in a simple manner, and the other layers are enclosed in the process. The projecting parts of the layers are preferably joined together to form a seal by means of thermal fusion. In order to obtain a decoratively attractive support, it is also possible to fix the covering layer to the bottom layer with a decorative lace, combined with fusion of the two layers, in which case the lace may be threaded through one or both supporting layers if desired.

An attractive stable support is obtainable if the dimensions of the covering layer are selected in such a way that they are slightly larger than those of the bottom layer. This produces a flat bottom surface on the support, the connection between the covering layer and the bottom layer defining the edges of the bottom surface. The bottom surface formed in this way is flat and lies in a very stable manner on the work surface.

For the manufacture of a support comprising a mouse-mat, the covering layer and the bottom layer are selected in the dimensions suitable for the purpose, after which the layers are joined together along the edges of the support and of the mouse mat, as described above for the manufacture of the support. If desired, one or more additional reinforcement layers can be placed between the parts of the layers intended for the mouse mat part.

Many embodiments are possible within the scope of the invention. For instance, the covering layer can have a second covering layer placed on it, said second covering layer being, for example, transparent. Said second covering layer can be joined together with the first covering layer and the bottom layer, and possibly with the additional layer, in such a way that a space is produced between the second covering layer and the original first covering layer, for the accommodation of, for example, a picture. If desired, this second covering layer may cover the entire top surface of the support and contain an opening for inserting or removing a picture. The second covering layer may also be fixed only at some points on the original covering layer. It is therefore also possible for the second covering layer to cover only part of the first covering layer. Moreover, the second covering layer does not necessarily have to be fixed together with the first covering layer and the anti-slip layer at the position of the edge of the support, but said second covering layer may also be fixed at some points on the first covering layer.

It is also possible to print the covering layer for, for example, advertising purposes.

This invention will be discussed below with reference to the drawing, in which:
Figs 1 and 2 show perspective views of two embodiments of a support according to the invention,
Fig. 3 shows a cross-section along line X-X in Figure 1, and
Figs 4 and 5 show cross-sections of supports comprising mouse-mat according to the invention.

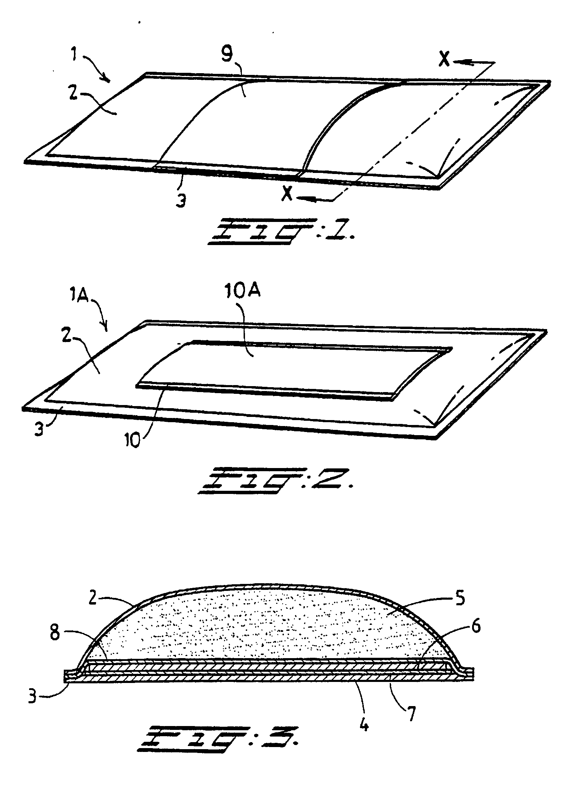

Fig. 1 shows a support 1, the top surface of which is formed substantially by a first covering layer 2, which at the edges is fused with an anti-slip bottom layer, which is not visible here. The support comprises a second covering layer 9, which for fixing to the support is likewise fused with covering layer 2 and the bottom layer at fused edge 3. The second covering layer 9 covers only part of the top surface of the support and is preferably made of a transparent material, so that pictures such as photographs or business cards and the like can be placed between said second covering layer and covering layer 2.

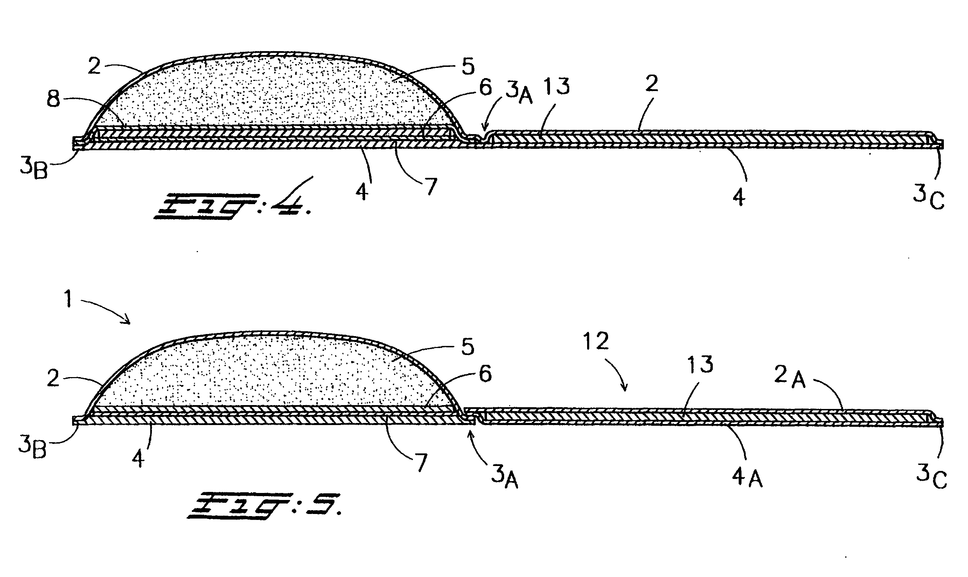

In Fig. 2 support 1A comprises a second covering layer 10A, which is fixed on covering layer 2 at the position of the edges 10 of covering layer 10A. The short sides of the second covering layer 10A are open, allowing space for a picture.

Fig. 3 shows a covering layer 2, resilient foam material 5, an anti-slip bottom layer 4, a first reinforcement layer 6 made of, for example, cardboard, and a second reinforcement layer 7 made of, for example, PVC. The bottom layer can be made of an anti-slip material.

An additional air-impermeable layer 8 is incorporated between the foam material 5 and the reinforcement layer 6, the foam material 5 being enclosed between the covering layer 2 and the additional layer 8, by the fact that the covering layer 2 is fused with the additional layer 8 at the position of 3. The two layers 2 and 8 are likewise fused with the anti-slip bottom layer 4. The foam material 5 can be, for example, open-cell polyether foam. In this case, edge 3 of the support is formed by the fusing of covering layer 2, additional layer 8 and bottom layer 4, which last layer is in the form of an anti-slip layer. The dimensions of the covering layer 2 are likewise slightly greater than those of bottom layer 4.

During the manufacture, the layers concerned are placed in a suitable manner on top of one another, covering layer 2, bottom layer 4 and the additional layer 8 projecting around the other layers. With slight compression of the edges of the resilient layer, the projecting parts of the covering layer, the bottom layer and the additional layer can be joined together, and any excess projecting material can be cut off. Owing to the presence of the additional air-impermeable layer, when the resilient layer is compressed, no air will be displaced between the supporting layer and the bottom layer, so that the bottom layer, and consequently the bottom face of the support, remains substantially flat.

Fig. 4 shows a support comprising a mouse-mat according to the invention, in which the support part is constructed in a corresponding way to that of the support of Fig. 3. Covering layer 1 and bottom layer 4 are dimensioned in such a way that they project beyond the support at the same side of the support. The support 1 is heat-sealed at the position of 3A and 3B, with a fusion seam all the way round. Said fusion seam also bounds the mouse mat part 12 on one side of the support, at the position of 3A. At the position of 3A, the fusion seam forms part of a fusion edge, which encloses the mouse mat part. Fusion edge 3C is part of said surrounding fusion edge. The top side of the mouse mat in this case is formed by a part of the covering layer 2.

However, instead of covering layer 2 and/or bottom layer 4 for the mouse mat part, a separate piece of an identical or different material can be used, and this material is joined to the edge of the support, for example by fusion, at the position of the fusion seam 3A, this being shown in Fig. 5. For this purpose, at the position of 3A the fusion seam of the support is preferably made slightly wider than it is at the position of 3B and of the short sides of the support, in order to form a good adhesion surface for the mouse mat part. In this case, a reinforcement layer 13 is incorporated between bottom layer 4A and top surface 2A, which is in the form of a covering layer. It is also possible to dispense with a fusion seam or provide only a partial fusion seam at the position of, for example, 3C, so that exchangeable pictures can be placed between the covering layer and the bottom layer of the mouse mat part.

Although it is not shown, the support comprising a mouse-mat illustrated in Fig. 5 is considered to comprise an additional layer 8 corresponding to that of Fig. 4.

## Claims

1. Support for supporting an arm or a wrist in particular during the use of a keyboard or a computer mouse, at least comprising the following in the specified order:
- a top covering layer (2),
- a layer of a substantially gel-free resilient material (5), containing gas, in particular air,
- at least one reinforcement layer (6, 7) made of a substantially non-compressible material, and
- a bottom layer (4),
the bottom layer (4) and the covering layer (2) being connected to each other so that they enclose the resilient layer and the reinforcement layer, **characterized in that** the covering layer and the bottom layer are joined together to form a seal by means of thermal fusion and that means which prevent gas displacement out of the resilient layer in the direction of the bottom layer are accomodated in the support, said means being formed by
a) the resilient material having a closed cell structure or
b) a substantially airtight envelope, enclosing the resilient material, which is open cell foam material, preventing gas displacement out of the resilient material in the direction of the bottom layer.

2. Support according to claim 1, **characterized in that** the support comprises an additional, substantially air-impermeable layer (8) defining two compartments separated from each other in an airtight manner, the first compartment having the resilient layer enclosed therein, the first compartment being bounded by the covering layer and the additional layer, the second compartment being bounded by the additional layer and the bottom layer.

3. Support according to claim 2, wherein the additional, subtstantial air-impermeable layer is between the resilient material and the reinforcement layer(s).

4. Support according to one of the preceding claims, **characterized in that** at least one of the reinforcement layers is made in such a way that it is reversibly flexible.

5. Support according to one of the preceding claims, **characterized in that** the bottom layer (4) comprises anti-slip material.

6. Support according to one of the claims 2-5, **characterized in that** the covering layer, the bottom layer and the additional layer are fused together at the position of the edges (3) of the support.

7. Support according to one of the preceding claims, for supporting an arm or a wrist in particular during use of a computer mouse, **characterized in that** it comprises a mouse mat (12).

8. Support according to claim 7, **characterized in that** at least on one side the bottom layer (4) of the support (1) projects from the support by the same dimensions as the mouse mat, the projecting part comprising a top surface which has sufficient friction with a computer mouse to allow use of the mouse.

9. Support according to claim 7 or 8, **characterized in that** at least on one side both the covering layer (2) and the bottom layer (4) of the support project by the same dimensions as the mouse mat and are joined together, thereby forming the mouse mat.

10. Method for manufacturing a support according to any of the claims 2-9, **characterized in that** a bottom layer (4), at least one reinforcement layer (6, 7), an additional, substantially air-impermeable layer (8), a resilient layer (5) and a covering layer (2) are placed in succession on top of one another, in the above or in the reverse order, the dimensions of these layers being selected in such a way that the bottom layer, the additional layer and the covering layer project on all sides beyond the reinforcement layer(s) and the resilient layer, after which the projecting parts of the covering layer, the additional layer and the bottom layer are joined together and enclose the resilient layer in a substantially airtight manner between the covering layer and the additional layer, and the reinforcement layer(s) between the additional layer and the bottom layer.

## Patentansprüche

1. Unterlage zum Stützen eines Arms oder Handgelenks insbesondere während des Gebrauchs einer Tatstatur oder einer Computermaus, umfassend zumindest Folgendes in der vorgegebenen Reihenfolge:
- eine obere Abdeckschicht (2),
- eine Schicht aus einem im Wesentlichen gelfreien elastischen Material (5), enthaltend Gas, insbesondere Luft,
- zumindest eine Verstärkungsschicht (6, 7) bestehend aus einem im Wesentlichen unkomprimierbaren Material und
- eine Bodenschicht (4),
wobei die Bodenschicht (4) und die Abdeckschicht (2) miteinander verbunden sind, so dass diese die elastische Schicht und die Verstärkungsschicht einschließen,
**dadurch gekennzeichnet,**
**dass** die Abdeckschicht und die Bodenschicht miteinander verbunden sind, um mittels einer thermischen Fusion eine Dichtung zu bilden und dass Mittel zur Verhinderung von Gasaustritt aus der elastischen Schicht in Richtung zu der Bodenschicht in der Unterlage aufgenommen sind, wobei diese Mittel bestehen aus
a) dem elastischen Material mit einer geschlossenen Zellstruktur oder
b) einer im Wesentlichen luftdichten Umhüllung, umfassend das elastische Material, welches ein offenzelliger Schaumstoff ist, welcher Gasaustritt aus dem elastischen Material in Richtung der Bodenschicht verhindert.

2. Unterlage nach Anspruch 1,
**dadurch gekennzeichnet,**
**dass** die Unterlage eine zusätzliche, im Wesentlichen luftundurchlässige Schicht (8) umfasst, welche zwei luftdicht voneinander getrennte Räume definiert, wobei der erste Raum die elastische Schicht einschließt, der erste Raum durch die Abdeckschicht und die zusätzliche Schicht begrenzt ist, und der zweite Raum durch die zusätzliche Schicht und die Bodenschicht begrenzt ist.

3. Unterlage nach Anspruch 2,
**dadurch gekennzeichnet,**
**dass** die zusätzliche, im Wesentlichen luftundurchlässge Schicht zwischen dem elastischen Material und der/den Verstärkungsschicht(en) angeordnet ist.

4. Unterlage nach einem der vorhergehenden Ansprüche,
**dadurch gekennzeichnet,**
**dass** zumindest eine der Verstärkungsschichten derart ausgebildet ist, dass diese reversibel flexibel ist.

5. Unterlage nach einem der vorherigen Ansprüche,
**dadurch gekennzeichnet,**
**dass** die Bodenschicht (4) Antirutschmaterial umfasst.

6. Unterlage nach einem der Ansprüche 2-5,
**dadurch gekennzeichnet,**
**dass** die Abdeckschicht, die Bodenschicht und die zusätzliche Schicht im Bereich der Kanten (3) der Unterlage zusammengeschweißt sind.

7. Unterlage nach einem der vorhergehenden Ansprüche, zum Stützen eines Arms oder eines Handgelenks, insbesondere während des Gebrauchs einer Computermaus,
**dadurch gekennzeichnet,**
**dass** die Unterlage eine Mausmatte (12) umfasst.

8. Unterlage nach Anspruch 7,
**dadurch gekennzeichnet,**
**dass** zumindest auf einer Seite die Bodenschicht (4) der Unterlage (1) in den gleichen Abmessungen wie die Mausmatte von der Unterlage hervorsteht, wobei der hervorstehende Teil eine obere Fläche umfasst, welche eine ausreichende Reibung mit der Computermaus bereitstellt, um die Verwendung der Maus zu ermöglichen.

9. Unterlage nach Anspruch 7 oder 8,
**dadurch gekennzeichnet,**
**dass** zumindest auf einer Seite sowohl die Abdeckschicht (2) als auch die Bodenschicht (4) der Unterlage in gleichen Abmessungen wie die Mausmatte hervorstehen und miteinander verbunden sind und dadurch die Mausmatte bilden.

10. Verfahren zur Herstellung einer Unterlage nach einem der Ansprüche 2 - 9,
**dadurch gekennzeichnet,**
**dass** eine Bodenschicht (4), zumindest eine Verstärkungsschicht (6, 7), eine zusätzliche im Wesentlichen luftundurchlässige Schicht (8), eine elastische Schicht (5) und eine Abdeckschicht (2) in Folge übereinander angeordnet sind, in der obigen oder der umgekehrten Reihenfolge, wobei die Maße dieser Schichten derart ausgewählt sind, dass die Bodenschicht, die zusätzliche Schicht und die Abdeckschicht an den Seiten über die Verstärkungsschicht(en) und die elastische Schicht hervorstehen, danach die hervorstehenden Teile der Abdeckschicht, der zusätzlichen Schicht und der Bodenschicht miteinander verbunden werden und die elastische Schicht in einer im Wesentlichen luftdichten Art und Weise zwischen der Abdeckschicht und der zusätzlichen Schicht enthalten ist und die Verstärkungsschicht(en) zwischen der zusätzlichen Schicht und der Bodenschicht enthalten ist.

## Revendications

1. Support pour supporter un bras ou un poignet en particulier durant l'utilisation d'un clavier ou une souris d'ordinateur, comprenant au moins ce qui suit dans l'ordre spécifié :
- une couche de couverture supérieure (2),
- une couche d'un matériau résilient sensiblement sans gel (5), contenant du gaz, en particulier de l'air,
- au moins une couche de renforcement (6, 7) faite d'un matériau sensiblement non-compressible, et
- une couche inférieure (4),
la couche inférieure (4) et la couche de couverture (2) étant reliées l'une à l'autre de telle sorte qu'elles enferment la couche résiliente et la couche de renforcement, **caractérisé en ce que** la couche de couverture et la couche inférieure sont jointes ensemble pour former une fermeture étanche par l'intermédiaire d'une fusion thermique et que des moyens qui empêchent le déplacement de gaz en dehors de la couche résiliente dans la direction de la couche inférieure sont logés dans le support, lesdits moyens étant formés par
a) le matériau résilient ayant une structure à alvéole fermée ou
b) une enveloppe sensiblement étanche à l'air, enfermant le matériau résilient, qui est un matériau en mousse à alvéole ouverte, empêchant le déplacement de gaz en dehors du matériau résilient dans la direction de la couche inférieure.

2. Support selon la revendication 1, **caractérisé en ce que** le support comprend une couche supplémentaire sensiblement imperméable à l'air (8) définissant deux compartiments séparés l'un de l'autre d'une manière étanche à l'air, le premier compartiment ayant la couche résiliente enfermée dans celui-ci, le premier compartiment étant borné par la couche de couverture et la couche supplémentaire, le second compartiment étant borné par la couche supplémentaire et la couche inférieure.

3. Support selon la revendication 2, dans lequel la couche supplémentaire sensiblement imperméable à l'air se trouve entre le matériau résilient et la (les) couche(s) de renforcement.

4. Support selon l'une des revendications précédentes, **caractérisé en ce qu'**au moins une des couches de renforcement est faite de telle manière qu'elle est flexible de manière réversible.

5. Support selon l'une des revendications précédentes, **caractérisé en ce que** la couche inférieure (4) comprend un matériau antidérapant.

6. Support selon l'une des revendications 2 à 5, **caractérisé en ce que** la couche de couverture, la couche inférieure et la couche supplémentaire sont fusionnées ensemble au niveau de la position des bords (3) du support.

7. Support selon l'une des revendications précédentes, pour supporter un bras ou un poignet en particulier durant l'utilisation d'une souris d'ordinateur, **caractérisé en ce qu'**il comprend un tapis de souris (12).

8. Support selon la revendication 7, **caractérisé en ce qu'**au moins sur un côté la couche inférieure (4) du support (1) fait saillie à partir du support suivant les mêmes dimensions que le tapis de souris, la partie en saillie comprenant une surface supérieure qui a une friction suffisante avec une souris d'ordinateur pour permettre l'utilisation de la souris.

9. Support selon la revendication 7 ou 8, **caractérisé en ce qu'**au moins sur un côté la couche de couverture (2) ainsi que la couche inférieure (4) du support font saillie suivant les mêmes dimensions que le tapis de souris et sont jointes ensemble, formant ainsi le tapis de souris.

10. Procédé pour fabriquer un support selon l'une quelconque des revendications 2 à 9, **caractérisé en ce qu'**une couche inférieure (4), au moins une couche de renforcement (6, 7), une couche supplémentaire sensiblement imperméable à l'air (8), une couche résiliente (5) et une couche de couverture (2) sont placées en succession l'une par-dessus l'autre, dans l'ordre ci-dessus ou l'ordre inverse, les dimensions de ces couches étant sélectionnées de telle manière que la couche inférieure, la couche supplémentaire et la couche de couverture font saillies sur tous les côtés au-delà de la (des) couche(s) de renforcement et de la couche résiliente, après quoi les parties en saillie de la couche de couverture, la couche supplémentaire et la couche inférieure sont jointes ensemble et enferment la couche résiliente d'une manière sensiblement étanche à l'air entre la couche de couverture et la couche supplémentaire, et la (les) couche(s) de renforcement entre la couche supplémentaire et la couche inférieure.
